(19) Europäisches Patentamt
European Patent Office
Office européen des brevets

(11) EP 2 230 797 A1

(12) EUROPEAN PATENT APPLICATION

(43) Date of publication:
22.09.2010 Bulletin 2010/38

(51) Int Cl.:
H04L 12/24 (2006.01)          H04L 12/26 (2006.01)
H04L 29/06 (2006.01)

(21) Application number: 09004024.7

(22) Date of filing: 20.03.2009

(84) Designated Contracting States:
AT BE BG CH CY CZ DE DK EE ES FI FR GB GR
HR HU IE IS IT LI LT LU LV MC MK MT NL NO PL
PT RO SE SI SK TR
Designated Extension States:
AL BA RS

(71) Applicant: ETH Zurich
8092 Zürich (CH)

(72) Inventors:
• Tellenbach, Bernhard
  8004 Zürich (CH)
• Sornette, Didier
  8708 Männedorf (CH)
• Maillard, Thomas
  8050 Zürich (CH)
• Burkhart, Martin
  8046 Zürich (CH)

(54) **Detecting network traffic anomalies in a communication network**

(57) For detecting network traffic anomalies in a communication network, determined (S1) at defined time intervals is network traffic data associated with network entities of the communication network. For the time intervals, calculated (S2) in each case are Tsallis entropy values for a plurality of entropy moments based on the network traffic data, the entropy moments being defined by Tsallis entropy parameters q. The network traffic anomalies are detected (S3) based on divergence of the Tsallis entropy values associated with the plurality of entropy moments from reference values. By exploring not one but a plurality of different entropy moments, a generalized form of entropy is used to capture more elaborately changes in network traffic, because the distribution of activity is not reduced to a single number, and thus, important information, such as the nature of the change, is not deleted, and an increased quantity of anomalies is detected.

Fig. 2

EP 2 230 797 A1

**EP 2 230 797 A1**

**Description**

Field of the Invention

The present invention relates to detecting network traffic anomalies in a communication network. Specifically, the present invention relates to a computer-implemented method and a computer system for detecting network traffic anomalies in a communication network, particularly malicious network attacks such as denial of service and worm attacks, based on network traffic data associated with network entities of the communication network.

Background of the Invention

Particularly with the advent of the Internet and the World Wide Web, our world has become not only highly interconnected but to a huge degree dependent on a global communication network. There is hardly any area of life left that does not depend on a reliable and stable network infrastructure. Fast and accurate detection of network traffic anomalies is a key factor in providing a reliable and stable network infrastructure. In recent years, a wide variety of advanced methods and tools have been developed for alerting and visualizing network traffic anomalies, particularly malicious attacks on the network infrastructure. For example, Barford, P., Kline, J., Plonka, D., and Ron, A. describe in "A signal analysis of network traffic anomalies", IMW '02: Proceedings of the 2nd ACM SIGCOMM Workshop on Internet measurement, New York, NY, USA, ACM (2002), 71-82, methods and tools which focus on analyzing anomalies based on volume metrics, such as e.g., traffic volume, connection count or packet count. Changes in traffic feature distributions are analyzed by Scherrer, A., Larrieu, N., Owezarski, P., Borgnat, P., and Abry, P. in "Non-Gaussian and long memory statistical characterizations for internet traffic with anomalies", IEEE Transactions on Dependable and Secure Computing 4(1) (2007), 56-70. Methods involving the analysis of content or the behavior of each host or group of hosts are described by Dubendorfer, T., and Plattner, B., in "Host behavior based early detection of worm outbreaks in internet backbones", 14th IEEE WET ICE. (2005), 166-171. However, content inspection or storing state information on a per host basis are usually limited to small- and medium-scale networks. If feasible at all, the link speeds and traffic volumes in large-scale networks hinder a reasonable return on investment from such methods. Most approaches designed for large-scale networks have therefore two things in common: First, they reduce the amount of input data by looking at flow-level information only, e.g., Cisco NetFlow (Cisco Systems Inc.: Netflow services solutions guide, http://www.cisco.com) or IPFIX (Quittek, J., Zseby, T., Claise, B., Zander, S.: Rfc 3917: "Requirements for IP flow information export (ipfix)", October 2004). Second, they use on-the-fly methods that do not rely on a large amount of stored state information. A major drawback of on-the-fly methods is their inappropriateness for approaches relying on the history of traffic feature distributions. A related problem arises, when one wants to visualize the evolution of IP address or flow size distributions over time. In large-scale networks, these distributions consist of millions of data points and it is unclear how to select a relevant subset.

A prominent way of capturing important characteristics of distributions in a compact form is the use of entropy analysis. Entropy analysis reduces the amount of information needed to be kept for detecting distributional changes (a) and allows for a compact visualization of such changes (b). Shannon entropy analysis represents a standard technique for capturing and describing distributions in a compact form. The Shannon entropy $S_q(X) = -\sum_{i=1}^{n} p_i \cdot \log_2\left(p_i\right)$ was defined by Shannon, C., in "Prediction and entropy of printed english", Bell System Technical Journal, January, 1951. Its use for detecting network anomalies has been studied in-depth and several anomaly detection approaches have applied it with considerable success. Evidence that methods based on Shannon entropy capture the relevant changes has been documented by Wagner, A., and Plattner, B., in "Entropy based worm and anomaly detection in fast IP networks", 14th IEEE WET ICE, Linkoping, Sweden, June 2005; Lakhina, A., Crovella, M., and Diot, C., in "Diagnosing network-wide traffic anomalies", ACM SIGCOMM, Portland, August 2004; and Li, X., Bian, F., Crovella, M., Diot, C., Govindan, R., Iannaccone, G., and Lakhina, A., in "Detection and Identification of Network Anomalies Using Sketch Subspaces". As it is just the expectation of the logarithm of the measure (with a minus sign to get a positive quantity), the Shannon entropy can be considered as a (one) logarithm moment. However, reducing the information about a distribution to a single number deletes important information, such as the nature of the change, or it might lead to overlooking a large amount of anomalies entirely.

Proposed by Ziviani, A., Monsores, M.L., Rodrigues, P.S.S., Gomes, A.T.A. in "Network anomaly detection using non-extensive entropy", IEEE Communications Letters 11 (12) (2007), is the use of Tsallis entropy for the detection of network anomalies. By injecting denial of service attacks into several traffic traces Ziviani et al. search for the optimal q-value for detecting the injected attacks. However, looking at a single time series for a specific value of q is not sufficient for revealing different types of anomalies.

2

Summary of the Invention

It is an object of this invention to provide a computer-implemented method and a computer system for detecting from network traffic data network traffic anomalies in a communication network, particularly malicious network attacks such as denial of service and worm attacks, which method and system do not have the disadvantages of the prior art. In particular, it is an object of the present invention to provide a computer-implemented method and a computer system for detecting the network traffic anomalies in large-scale communication networks such as the Internet.

According to the present invention, these objects are achieved particularly through the features of the independent claims. In addition, further advantageous embodiments follow from the dependent claims and the description.

According to the present invention, the above-mentioned objects are particularly achieved in that for detecting network traffic anomalies in a communication network interconnecting a plurality of network entities, determined at defined time intervals is network traffic data associated with the network entities. For example, the network entities are defined by different types of network (traffic) features including source IP address, destination IP address, source port, destination port, source Autonomous System, and/or destination Autonomous System. Based on the network traffic data, entropy values for a plurality of entropy moments are calculated for the time intervals. Particularly, the entropy values associated with the plurality of entropy moments are calculated for the different types of network features based on the network traffic data associated with the respective type of network (traffic) feature. Preferably, Tsallis entropy values are calculated for a plurality of entropy moments defined by Tsallis entropy parameters q. Subsequently, the network traffic anomalies are detected based on divergence of the entropy values associated with the plurality of entropy moments from reference values. For example, the network traffic anomalies include malicious network attacks associated with different anomaly types including denial of service attacks, e.g. distributed denial of service attacks or worm attacks, partial network outages or the effects of disruptions to major network-based services or applications such as DNS or Skype. Particularly, the network traffic anomalies are detected based on divergence of the entropy values associated with the respective type of network (traffic) feature and the plurality of entropy moments from reference values. By exploring not one but a plurality of different entropy moments, a generalized form of entropy is used to capture more elaborately changes in network (traffic) features, because the information about the distribution of activity, associated with the respective network (traffic) features, is not reduced to a single number, and thus, important information, such as the nature of the change, is not deleted, and a greater quantity of anomalies is detected, which might be overlooked otherwise (in the present context, the term distribution of activity relates to the probability distribution function of any metric derived from network traffic data associated with the network (traffic) features outlined above). Furthermore, using multiple levels of aggregation (defined by the different types of network features), such as IP addresses (fine grained) or Autonomous Systems (coarse grained), makes it possible to reveal and classify different types of anomalies.

In a preferred embodiment, the entropy values associated with the plurality of entropy moments are normalized to compensate for absolute value differences of the entropy values associated with the different entropy moments, and the entropy values are mapped to a common axis or range. Specifically, the normalization includes subtracting the average or median value of a baseline model (e.g. a baseline model based on an observation period of e.g. one day, one week, one month or longer, or a baseline distribution characterizing the baseline at specific points in time) at a given time T and dividing the values above (below) zero by the maximum (minimum) value of the baseline model at time T.

Preferably, for the network traffic anomalies, anomaly types are determined based on defined patterns associated with the plurality of entropy moments. Specifically, the patterns indicate for the different entropy moments deviations of entropy values from those of average or normal observation periods, e.g. the patterns indicate whether a respective entropy value is at or above a defined maximum threshold, at or below a defined minimum threshold, or within the defined minimum and maximum thresholds.

Preferably, the plurality of entropy moments is defined by a set of entropy parameters within a defined value range including positive and negative values. For example, for defining different entropy moments of the Tsallis entropy, the Tsallis entropy parameters q are defined within a value range of [-2, +2] and incremental steps of q=0.25 such that q = {-2.00, -1.75, ..., +1.75, +2.00}. Considering negative values of q has the advantage, that changes in the low-activity region of the distribution can be detected as the entropy is very sensitive to such changes.

In an embodiment, based on the network traffic data, (traffic/Tsallis) entropy spectrums are calculated and displayed. For example, an entropy spectrum is defined by a color axis (third axis) which maps the entropy values for a specific entropy moment (second axis) at a specific point in time (first axis). The (traffic/Tsallis) entropy spectrums are used to analyze changes in network (traffic) feature distributions such as to characterize the structure of anomalies using network traffic data (traffic traces) from a large Internet Service Provider (ISP), for example.

In addition to the computer-implemented method and computer system for detecting network traffic anomalies in a communication network, the present invention also relates to a computer program product comprising computer program code means for controlling one or more processors of a computer system, such that the computer system performs the method of detecting the network traffic anomalies in the communication network. Preferably the computer program product comprises a computer-readable medium containing the computer program code means therein.

Brief Description of the Drawings

The present invention will be explained in more detail, by way of example, with reference to the drawings in which:

Figure 1 shows a block diagram illustrating schematically a system for detecting network traffic anomalies in a communication network.

Figure 2 shows a flow diagram illustrating an exemplary sequence of steps for detecting network traffic anomalies in the communication network.

Figure 3 shows a graph illustrating an example of a Tsallis entropy spectrum for incoming traffic at destination IP addresses during a reflector attack in the communication network.

Figure 4 shows a graph illustrating the effective number of active reflectors (top) and the effective number of attack flows toward (candidate) reflectors in the communication network (bottom).

Figure 5 shows a graph illustrating an example of a three-dimensional (3D) Tsallis entropy spectrum of incoming traffic on source ports during a reflector distributed denial of service attack in the communication network.

Figure 6 shows a graph illustrating an example of a Tsallis entropy spectrum for incoming traffic on Autonomous Systems during a short distributed denial of service attack in the communication network.

Figure 7 shows an example of network traffic characteristics for a specific time interval.

Figure 8 shows examples of (spectrum) patterns associated with different types of network attacks for different types of network features and different values of Tsallis entropy parameters q.

Detailed Description of the Preferred Embodiments

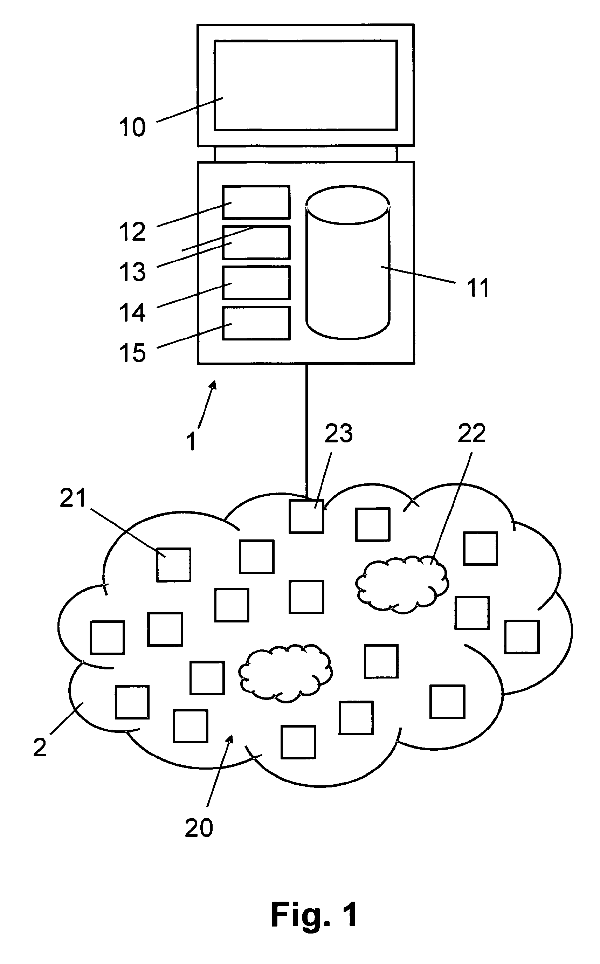

In Figure 1, reference numeral 1 refers to a computer system for detecting network traffic anomalies in a communication network 2. The computer system 1 comprises one or more fully operable computers with one or more processors, data and program memory. As illustrated in Figure 1, the computer system is provided with a display 10 and comprises a data store 11 and various functional modules including a control module 12, an entropy calculator 13, a spectrum calculator 14, and an anomaly detector 15. In an embodiment, the data store 11 includes a database. Preferably, the functional modules are implemented as programmed software modules on a computer program product. Preferably, the functional modules comprise computer code stored on a computer-readable medium which is connected fixed or removably to processors of the computer system 1. One skilled in the art will understand, however, that, in alternative embodiments, the functional modules can be implemented fully or partly by way of hardware modules.

The communication network 2 interconnects a plurality of network entities 20, e.g. hundreds of thousands or millions of network entities. The network entities 20 include individual computers 21 (servers, personal computers, routers, etc.) and Autonomous Systems 22. An Autonomous System is a collection of connected IP routing prefixes under the control of one or more network operators, e.g. a company network which again comprises a plurality of interconnected computers. The network entities 20 are defined by different types of network (or traffic) features including source IP address, destination IP address, source port, destination port, source Autonomous System (number), or destination Autonomous System (number), respectively.

As indicated schematically in Figure 1, the communication network 2 further includes one or more network service entities 23 configured to track, store and provide network traffic data indicative of activities in the communication network 2. For example, the network service entities 23 comprise one or more border routers of the communication network 2. Specifically, the network service entities 23 collect network traffic data indicative of activities at the network entities 20, i.e. any metric derived from network traffic traces. For example, the network traffic data includes information about data flow and data volume exchanged between communication partners, e.g. number of packets, number of bytes and/or duration of a data exchange between identified source IP addresses, destination IP addresses, source ports, destination ports, source Autonomous Systems and destination Autonomous Systems. Preferably, the communication network 2 is an IP network comprising the Internet or a defined subset of the Internet, for example the Swiss Academic and Research Network (SWITCH, AS 559), a medium-sized backbone operator that connects several universities and research labs (e.g. IBM and CERN) to the Internet. The SWITCH IP address range contains about 2.4 million IP addresses, and the traffic volume varies between 60 and 140 million NetFlow records per hour.

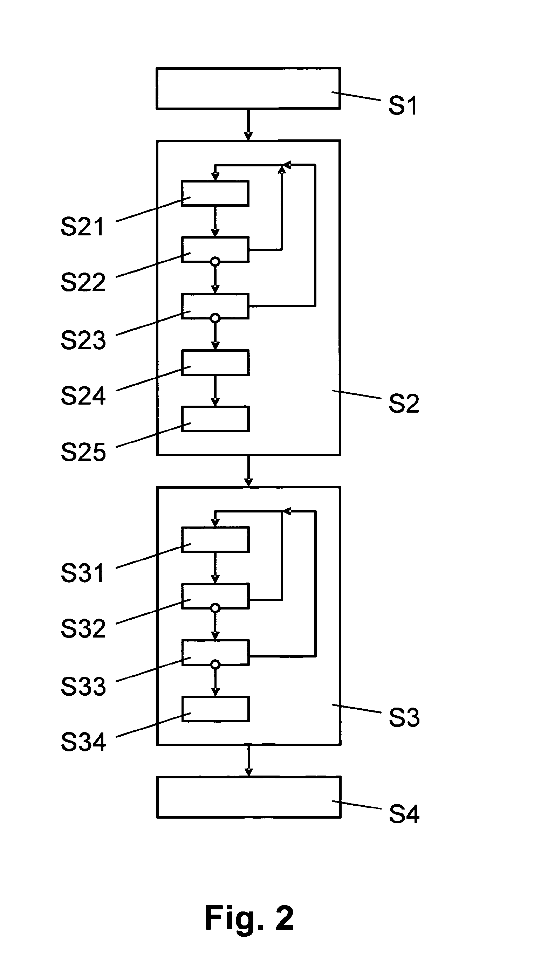

In the following paragraphs, described with reference to Figure 2 are possible sequences of steps performed by the functional modules for detecting network traffic anomalies in the communication network 2.

In step S1, the control module 12 determines network traffic data associated with the network entities 20. The network traffic data is aggregated and determined at defined time intervals, for example periodically, e.g. at intervals of five, ten or fifteen minutes. In essence, the sample distribution of the various network (traffic) features is aggregated over the respective time interval. While the results using the fifteen minutes interval are much smoother, shorter intervals are better suited to point out anomalies that last only tens of seconds or a few minutes. The control module 12 receives or retrieves, respectively, the network traffic data from the one or more network service entities 23. For example, the network traffic data relates separately to various protocols including TCP (Transmission Control Protocol), UDP (User Datagram Protocol), ICMP (Internet Control Message Protocol) and/or other protocols. For further processing, the network traffic data is stored in data store 11.

In step S2, based on the network traffic data, the entropy calculator 13 calculates for the time intervals in each case (at the end of the time interval) entropy values for a plurality of entropy moments. As will be explained below, preferably, Tsallis entropy values are calculated for a plurality of entropy moments defined by Tsallis entropy parameters q.

In order to reveal different aspects of the network traffic data, rather than using the Shannon entropy, calculated are other generalized entropies which rely on moments different from the log-moment of the Shannon entropy. For example, the Renyi and Tsallis entropies are two such generalized entropies, the latter being an expansion of the former. The Tsallis entropy $S_q(X)$ is used by preference, because it has a direct interpretation in terms of moments of order q of the distribution:

$$S_q(X) = \frac{1}{q-1}\left(1 - \sum_{i=1}^{n}\left(p_i\right)^q\right) \qquad (1)$$

While Shannon's entropy is better adapted to Normal distributions, the Tsallis entropy is better suited to deal with non-Gaussian measures, which are well-known to characterize Internet traffic.

The probability distribution $p_i$, used for calculating the Tsallis entropy, is based on activity $a_i$, i.e. the number of occurrences of element i within the defined time interval, an element i being a specific instance of one of the network (traffic) features defined above (e.g. source IP address "10.0.0.1"):

$$P[I = i] = p_i = \frac{a_i}{\sum_j a_j} \qquad (2)$$

The probability distribution $p_i$ can also be interpreted as the relative activity of i.

It should be noted that for the Tsallis entropy parameter q = 1, the Tsallis entropy corresponds to the Shannon entropy. Different entropy parameters q make it possible to reveal different features of the measure characterizing the system under analysis. For detecting network traffic anomalies in the communication network 2, different entropy parameters q define different entropy moments which make it possible to emphasize the time-varying features of the distribution of activity in the communication network 2. Varying the value of the Tsallis entropy parameter q makes it possible to emphasize different parts of the measure of Internet fluxes. Values of q > 1 put more emphasis on the most active structural elements (i.e. network features), while values of q < 1 put more emphasis on the least active structural elements. Hence, by adapting the Tsallis entropy parameter q, it is possible to determine anomalies that

> 1. increase or decrease the activity of elements with no or low activity, for q < 1,
>
> 2. affect the activity of a large share of elements, for q around 1, or
>
> 3. increase or decrease the activity of elements with high activity, for q > 1, respectively.

By experimenting with traces from different network service entities 23 (sensors) and years (2003 to 2008), showing largely differing traffic characteristics, it has been found that the selection of the Tsallis entropy parameter q from the parameter set Q = {-2, -1.75, -1.50, -1.25, -1.00, -0.75, -0.50, -025, 0.00, 0.25, 0.50, 0.75, 1.00, 1.25, 1.50, 1.75, 2.00} gives sufficient information to detect network anomalies in all of those traces. Large values q > 2 or smaller values q < -2 were found not providing notable gains. Hence, this choice of the Tsallis entropy parameter q worked for many different traces and is therefore strong empirical evidence that it requires little or no tuning to the traffic characteristics of a network service entity 23 (sensor).

Specifically, in step S21, the entropy calculator 13 calculates and stores an entropy value for a given time interval, a given type of network feature (e.g. source IP address), and a given entropy moment or corresponding Tsallis entropy parameter q, respectively. Depending on the application, incoming and outgoing traffic is considered separately for the network features.

In step 522, the entropy calculator 13 determines the next entropy moment to be processed for the given type of network feature and proceeds in step S21. In other words, the entropy calculator 13 selects from the defined parameter set Q the subsequent Tsallis entropy parameter q to be processed next. If all entropy parameters q from the defined parameter set Q have been processed for the given type of network feature, the entropy calculator 13 proceeds in step S23.

In step 523, the entropy calculator 13 determines the next type of network (traffic) feature to be processed for the given time interval and proceeds in step S21. If all defined types of network feature have been processed for the given time interval, the entropy calculator 13 proceeds in step S24 or S25, respectively.

In optional step S24, the spectrum calculator 14 calculates entropy spectrums based on the network traffic data. Specifically, from the entropy values calculated in steps S21, S22, 523, the spectrum calculator 14 calculates Tsallis (traffic) entropy spectrums each defined by a color axis mapping the entropy values for a specific entropy moment, i.e. a specific Tsallis entropy parameter q, at a specific point in time.

The entropy spectrums are displayed on display 10. Preferably, the Tsallis entropy spectrum is a three axis plot that plots the entropy value over time (first axis) and for several values of q (second axis). For convenient 2D presentation, the third axis (showing the normalized entropy values) is mapped to a color range. The Tsallis entropy spectrum illustrates the temporal dynamics of feature distributions in various regions of activity, ranging from very low activity elements for negative q's to high activity elements for q > 1.

In step S25, based on maximum and minimum entropy values within a defined observation period, the entropy calculator 13 normalizes the entropy values calculated in step S21 for the different entropy parameters q. Through calculating the normalized entropy values, the entropy calculator 13 compensates for the large absolute difference of the entropies for different values of the entropy parameter q, and maps the entropy values to a common axis or range. More specifically, the normalization consists e.g. of subtracting the average or median value of a baseline model at a given time T and then dividing the values above (below) zero by the maximum (minimum) value of the baseline model at time T. For example, the baseline model is based on an observation period of e.g. one day, one week, one month or longer, and/or the baseline model is based on a baseline distribution characterizing the baseline at specific points in time. In an embodiment, the entropy values are mapped to a fixed value range of R = [0,1]:

$$S_{normalized,q} = \frac{S_q - \min(S_q)}{\max(S_q) - \min(S_q)} \qquad (3)$$

Where min(Sq) and max($S_q$) are the minimum or maximum entropy values, respectively, within a defined observation period, e.g. a historical observation period of several weeks, months or even years (global normalization), or just a daily observation period (daily normalization). The global normalization is used to identify dominating changes. If such a dominating change is present, it stands out at the cost of a decreased visibility of non-dominating changes. The daily normalization is used to assess whether changes stay within the variations of the respective day. Preferably, anomaly detection is based on the daily normalization approach.

Depending on the embodiment, normalization may be performed prior to or after calculating and displaying the entropy spectrum.

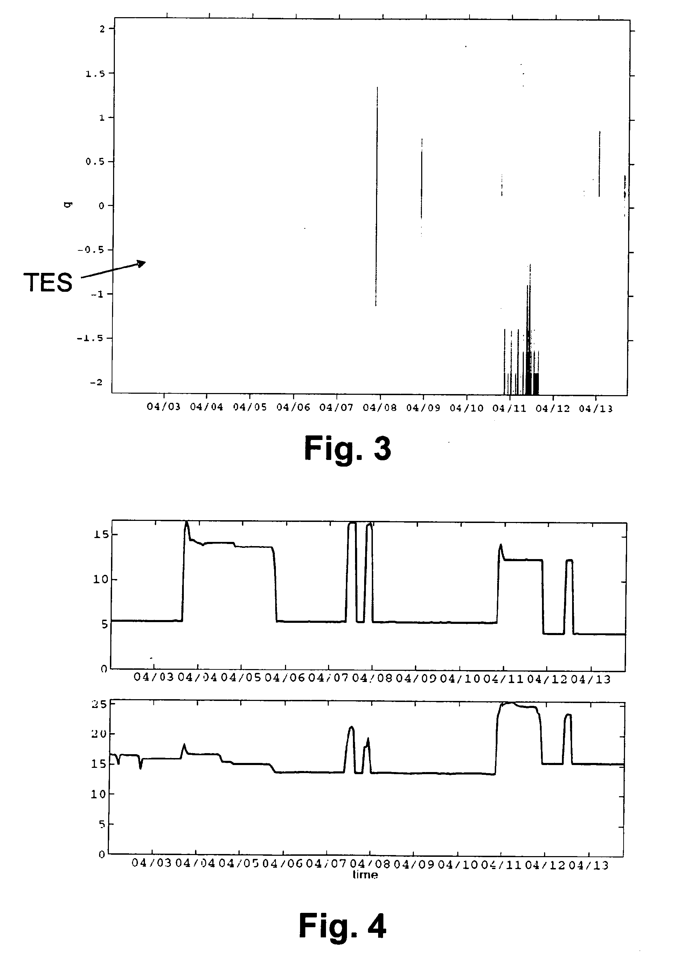

Figure 3 illustrates an example of a Tsallis entropy spectrum TES for incoming traffic of destination IP addresses during a reflector attack in the communication network 2, for a ten day time period (2008/04/03 to 2008/04/13) and Tsallis entropy parameter q in the range [-2.00,+2.00]. The shown "spectral lines" indicate entropy values below (e.g. in a first color) and above (e.g. in a different second color) defined thresholds, indicative of a "normal" observation day. The reflector distributed denial of service attack is clearly visible around 2008/04/11 and lasts for almost one day.

Figure 4 shows the effective activity of the reflectors during a two-week period. The effective number of active reflectors is shown in the top graph of Figure 4, whereas the effective number of attack flows toward (candidate) reflectors in the communication network 2 is shown in the bottom graph. The sustained activity on 2008/04/04 and 2008/04/05 without attack flows suggests that attackers are scanning the communication network 2 for potential reflectors.

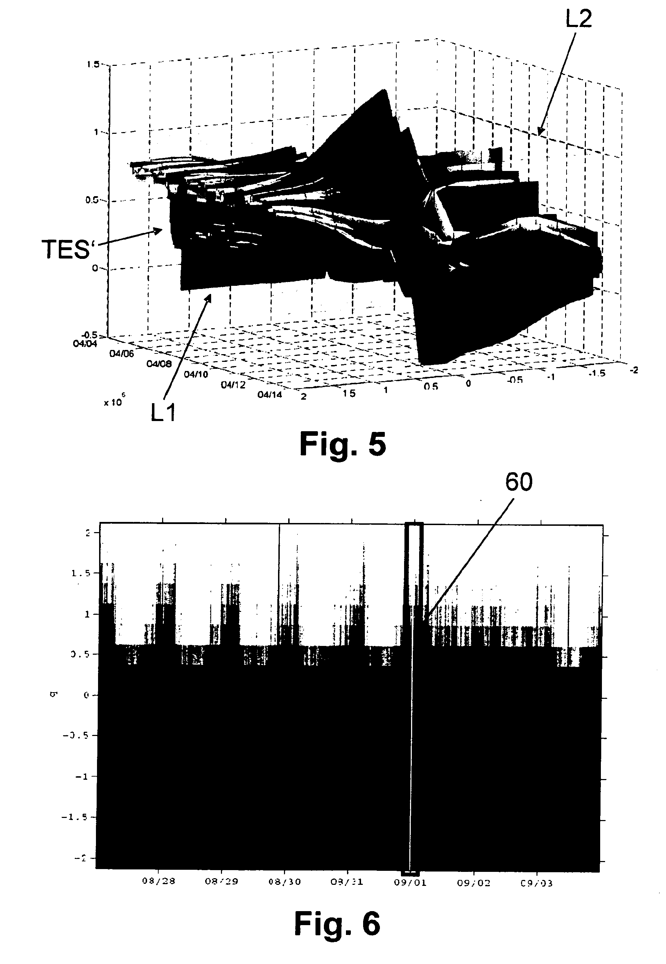

Figure 5 illustrates an example of a 3D Tsallis entropy spectrum TES' of incoming source ports during a reflector denial of service attack in the communication network 2, for a time period of eleven days (2008/04/04 to 2008/04/14) and Tsallis entropy parameter q in the range [-2.00,+2.00]. The transparent layers L1, L2 represent defined minimum and maximum thresholds, indicative of a "normal" observation day. The shown spectrum indicates normalized entropy values.

Figure 6 illustrates an example of a Tsallis entropy spectrum for incoming traffic on Autonomous Systems. Spectral line 60 indicates a short (e.g. ten minutes) distributed denial of service attack on a router and a host with eight million spoofed source addresses. The attack is nicely visible for q < 0 on 2008/09/01. Although the covered period is eight days, the attack is visible with an excellent signal to noise ratio and no false alarms. It should be noted that for the Shannon entropy (q = 1), used in the prior art, the peak is insignificant.

In step S3, the anomaly detector 15 detects network traffic anomalies. Generally, for detecting network traffic anomalies, the anomaly detector 15 employs a time-series based detection approach such as Kalman Filters, and/or a detection approach based on models derived through automatic learning methods such as support vector machines (SVM). For example, the anomaly detector 15 detects network traffic anomalies based on divergence of the (Tsallis) entropy values associated with the plurality of entropy moments or corresponding (Tsallis) entropy parameter q, respectively, from reference values. Specifically, the network traffic anomalies are detected based on divergence of the entropy values associated with the respective type of network feature from reference values, incoming and outgoing traffic being considered separately for the network features, for example.

Malicious attacks often exhibit very specific traffic characteristics that induce changes in feature distributions known to be heavy-tailed. In particular, the set of involved values per network feature is often found to be either very small or very large. In a denial of service attack, for instance, the victim is usually a single entity, e.g. a host or a router. The attacking hosts, on the other hand, are large in numbers, especially if source addresses are spoofed. Similarly, if a specific service is targeted by an attack, a single destination port is used, whereas source ports are usually selected randomly. In general, specific selection of victims or services leads to concentration on a feature and, in turn, to a change in the high activity domain. In contrast, random feature selection results in dispersion and impacts the low activity domain (e.g. spoofed IP addresses only occur once in the trace). Knowing this, it is possible to profile an attack based on the affected activity regions for each network (traffic) feature.

In step S31, the anomaly detector 15 determines the network traffic characteristics of the current interval by determining the divergence of the (normalized) Tsallis entropy value associated with a given network feature and a given Tsallis entropy parameter q from reference values. Specifically, the anomaly detector 15 determines the network traffic characteristics of the current interval by assessing whether the (normalized) Tsallis entropy value associated with a given network feature and a given Tsallis entropy parameter q is at or above a defined maximum threshold $maxS_q$ (positive alert, $c_q$ = "+"), at or below a defined minimum threshold $minS_q$ (negative alert, $c_q$ = "-"), or within the defined minimum and maximum thresholds (normal conditions, $c_q$ = "0"). For example, defined minimum and maximum thresholds represent the defined minimum and maximum thresholds, indicative of a regular observation period, e.g. a "normal" observation day, without any anomalies. Preferably, incoming and outgoing traffic is considered separately for the network features, and the anomaly detector 15 stores individual conditions $c_q$ for incoming and outgoing traffic for the respective type of network feature and entropy parameter q.

In step S32, the anomaly detector 15 determines the next entropy moment or corresponding Tsallis entropy parameter q, respectively, to be processed for the given type of network feature and proceeds in step S31. If all entropy parameters q from the defined parameter set Q have been processed for the given type of network feature, the anomaly detector 15 proceeds in step S33.

In step S33, the anomaly detector 15 determines the next type of network feature to be processed and proceeds in step S31. If all defined types of network feature have been processed, the anomaly detector 15 proceeds in step S34.

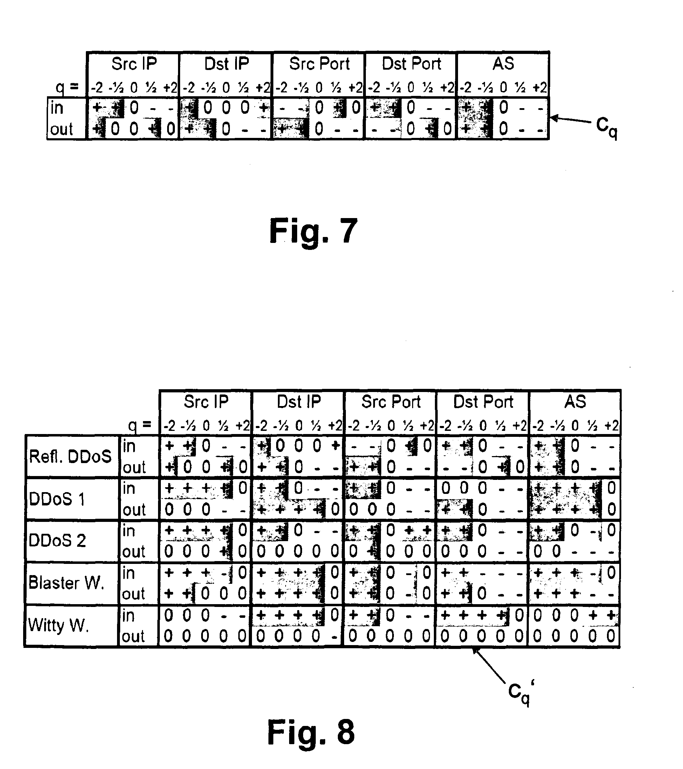

Figure 7 illustrates an example of network traffic characteristics of an interval including the conditions $c_q$ ("-", "0", "+") determined by the anomaly detector 15 for network features including source IP address (Src IP), destination IP address (Dst IP), source port (Src Port), destination port (Dst Port), and Autonomous System (AS), and for Tsallis entropy parameters q = {-2.0, -0.5, 0.0, +0.5, +2.0}, separately for incoming (in) and outgoing (out) traffic.

In step S34, the anomaly detector 15 retrieves from data store 11 defined (spectrum) patterns associated with different types of network traffic anomalies, particularly different types of network attacks.

Figure 8 illustrates examples of such patterns expected (e.g. based on historical data) from various types of network attacks for different types of network features and different values of Tsallis entropy parameters q. In the examples of Figure 8, the (spectrum) patterns are related to network features including source IP address (Src IP), destination IP address (Dst IP), source port (Src Port), destination port (Dst Port), and Autonomous System (AS), and to Tsallis entropy parameters q = {-2.0, -0.5, 0.0, +0.5, +2.0}. As illustrated in Figure 8, for each attack, incoming (in) and outgoing (out) traffic is considered separately. Specifically, Figure 8 illustrates patterns for different anomaly types including reflector distributed denial of service attack (Refl. DDoS), short (e.g. ten minutes) denial of service attack (DDoS 1), long (e.g. thirteen hours) denial of service attack (DDoS 2), blaster worm attack, and witty worm attack. As described with reference to step S31, a condition $c_q$' = "+" (positive alert) indicates that the (normalized) Tsallis entropy value associated with the given network feature and Tsallis entropy parameter q is at or above a defined maximum threshold $maxS_q$; a condition $c_q' = "-"$ (negative alert) indicates that the respective (normalized) Tsallis entropy value is at or below a defined minimum threshold $minS_q$; and a condition $c_q' = "0"$ (normal condition) indicates that the respective (normalized) Tsallis entropy value is within the defined minimum and maximum thresholds.

As can be seen in Figure 8, in the scenarios represented by the patterns, the web servers used as reflectors in the reflector DDoS attack appear in the incoming destination IP addresses as requests from the "real attackers". In the scenario, the number of reflectors (e.g. 30,000) was large enough to increase the area of the high activity domain, resulting in a positive alert for q = 2. The relative activity of rare events was further reduced, amplifying their impact in the low activity domain and resulting in another positive alert for q = -2. The victim, being a single high activity host, had a contrary influence on the outgoing destination IP addresses and Autonomous System. The relative activity of other hosts was reduced by the appearance of the new heavy hitter and, thus, the overall area of the high activity domain was decreased. The reduction in relative activity also occurred for the already rare hosts, again amplifying their impact in the low activity domain. A similar effect is observed in the incoming destination ports, where a concentration on a specific port is induced by the attack. However, the incoming source ports were randomly distributed and activated virtually all ports. As a consequence, the former rare ports experienced a lift in activity and did not contribute to the low activity domain anymore, leading to negative alerts for q < 0. It can be noted that the patterns are symmetric with respect to the diagonal. That is, changes in incoming SrcIP/SrcPort columns are reflected in outgoing DstIP/DstPort columns and vice versa. This indicates that the reflectors actually managed to reply to all requests (no egress filter was in place).

The main difference between the reflector DDoS and the ordinary DDoS attacks is that the former uses real hosts (the reflectors), whereas the latter uses massively spoofed source IP addresses. For both attacks, the incoming SrcIP Tsallis entropy (spectrum) was affected over a wide range (++++0), including the SrcIP count (q = 0). For the DDoS 2, however, the alert in outgoing destination IP addresses is missing because no response flows were generated.

In the examples of Figure 8, for both, the Blaster and the Witty worm, destination addresses of spreading attack traffic were generated randomly, much the same way as sources were spoofed during the DDoS attacks. In fact, the pattern exhibited by incoming worm destination IP addresses is exactly the same as the pattern for incoming DDoS source IP addresses. The pattern produced by random feature selection (++++0) is also visible in incoming destination port for the Witty worm. On the other hand, the pattern specific to feature concentration (++0-) is for instance visible in incoming Witty source port (fixed to UDP 4000), incoming reflector DDoS destination port (fixed to TCP 80) or incoming destination IP addresses for DDoS 1 and 2. Random feature selection can have a different impact on ports than on IP addresses. Whereas the incoming destination port for Witty shows the typical pattern, the one for incoming source ports of the reflector DDoS looks quite different (-0+0). Random selection of IP addresses leads to many addresses with very low activity because the range of potential addresses is big. For ports, the range is limited to 65535 values. Thus, if intensive random port scanning is performed, all ports are often revisited and become frequent, basically eliminating the low activity area. This is what happened in the example of the reflector DDoS case. It can be concluded that for ports, the strength (volume) of the attack plays a crucial role. For low volume attacks, the random port pattern looks like the random IP pattern; however, increasing attack volume shifts the pattern toward -0+0. Fundamental distribution changes such as concentration or dispersion of network features are well reflected by different Tsallis entropy (spectrum) patterns and can therefore be used to infer underlying traffic structure. In further embodiments, the effect of attack volume as well as additional patterns is considered, e.g., the distribution of flow sizes and durations.

In step S34, the anomaly detector 15 further determines whether the current interval shows characteristics of a network traffic anomaly by comparing the calculated network traffic characteristics $c_q$ of the current interval to the anomaly patterns $c_q'$ retrieved from the data store 11. If there is a full match or a partial match (e.g. defined by a matching ratio) with the pattern of at least one type of anomaly, the anomaly detector 15 proceeds in step S4; otherwise, processing continues in step S1.

In step S4, the anomaly detector 15 generates an anomaly alert for the one or more types of anomaly determined in step S34. For example, the anomaly alert is displayed on a display 10, printed on printer, generated as an alert signal, and/or issued as an alert message to one or more communication terminals. Subsequently, processing continues in step S1.

It should be noted that, in the description, the computer program code has been associated with specific functional modules and the sequence of the steps has been presented in a specific order, one skilled in the art will understand, however, that the computer program code may be structured differently and that the order of at least some of the steps could be altered, without deviating from the scope of the invention.

### Claims

**1.** A computer-implemented method of detecting network traffic anomalies in a communication network (2) interconnecting a plurality of network entities (20), the method comprising:

determining (S1) at defined time intervals network traffic data associated with the network entities (20);
calculating (S2) for the time intervals in each case entropy values for a plurality of entropy moments based on the network traffic data; and
detecting (S3) the network traffic anomalies based on divergence of the entropy values associated with the plurality of entropy moments from reference values.

2. The method of claim 1, wherein calculating (S2) the entropy values includes calculating Tsallis entropy values for a plurality of entropy moments defined by Tsallis entropy parameters q.

3. The method of one of claims 1 or 2, wherein calculating (S2) the entropy values includes normalizing (S25) the entropy values associated with the plurality of entropy moments to compensate for absolute value differences of the entropy values associated with different entropy moments.

4. The method of one of claims 1 to 3, wherein detecting (S3) the network traffic anomalies includes determining (S34) an anomaly type based on defined patterns associated with the plurality of entropy moments.

5. The method of one of claims 1 to 4, wherein the plurality of entropy moments is defined by a set of entropy parameters within a defined value range including positive and negative values.

6. The method of one of claims 1 to 5, wherein the network entities (20) are defined by different types of network features including at least one of source IP address, destination IP address, source port, destination port, source Autonomous System, and destination Autonomous System; the entropy values associated with the plurality of entropy moments are calculated for the different types of network features based on the network traffic data associated with the respective type of network feature; and the network traffic anomalies are detected based on temporal changes of the entropy values associated with the plurality of entropy moments and the respective type of network feature.

7. The method of one of claims 1 to 6, wherein the network traffic anomalies include attacks associated with different anomaly types including at least one of denial of service attack, distributed denial of service attack, reflector distributed denial of service attack, worm attack, partial network outage, and effects of disruptions to network-based services or applications.

8. The method of one of claims 1 to 7, further comprising calculating (S24) entropy spectrums based on the network traffic data, an entropy spectrum being defined by a color axis mapping the entropy values for a specific entropy moment at a specific point in time; and displaying the entropy spectrums.

9. A computer system (1) for detecting network traffic anomalies in a communication network (2) interconnecting a plurality of network entities (20), the system (1) comprising:

a data store (11) configured to store network traffic data associated with the network entities (20) and determined at defined time intervals;
an entropy calculator (13) configured to calculate for the time intervals in each case entropy values for a plurality of entropy moments based on the network traffic data; and
an anomaly detector (15) configured to detect the network traffic anomalies based on divergence of the entropy values associated with the plurality of entropy moments from reference values.

10. The system (1) of claim 9, wherein the entropy calculator (13) is configured to calculate Tsallis entropy values for a plurality of entropy moments defined by Tsallis entropy parameters q.

11. The system (1) of one of claims 9 or 10, wherein the entropy calculator (13) is configured to normalize the entropy values associated with the plurality of entropy moments to compensate for absolute value differences of the entropy values associated with different entropy moments.

12. The system (1) of one of claims 9 to 11, wherein the anomaly detector (15) is configured to determine an anomaly type based on defined patterns associated with the plurality of entropy moments.

13. The system (1) of one of claims 9 to 12, wherein the plurality of entropy moments is defined by a set of entropy parameters within a defined value range including positive and negative values.

**14.** The system (1) of one of claims 9 to 13, wherein the network entities (20) are defined by different types of network features including at least one of source IP address, destination IP address, source port, destination port, source Autonomous System, and destination Autonomous System; the entropy calculator (13) is configured to calculate the entropy values associated with the plurality of entropy moments for the different types of network features based on the network traffic data associated with the respective type of network feature; and the anomaly detector (15) is configured to detect the network traffic anomalies based on temporal changes of the entropy values associated with the plurality of entropy moments and the respective type of network feature.

**15.** The system (1) of one of claims 9 to 14, wherein the network traffic anomalies include attacks associated with different anomaly types including at least one of denial of service attack, distributed denial of service attack, reflector distributed denial of service attack, worm attack, partial network outage, and effects of disruptions to network-based services or applications.

**16.** The system (1) of one of claims 9 to 15, further comprising a spectrum calculator (14) configured to calculate entropy spectrums based on the network traffic data, an entropy spectrum being defined by a color axis mapping the entropy values for a specific entropy moment at a specific point in time, and to display the entropy spectrums.

**17.** A computer program product comprising a computer-readable medium containing computer program code means for controlling one or more processors of a computer such that the computer

determines (S1) at defined time intervals network traffic data associated with a plurality of network entities (20) of a communication network (2);
calculates (S2) for the time intervals in each case entropy values for a plurality of entropy moments based on the network traffic data; and
detects (S3) network traffic anomalies based on divergence of the entropy values associated with the plurality of entropy moments from reference values.

**Fig. 1**

**Fig. 2**

**Fig. 3**

**Fig. 4**

## Fig. 5

## Fig. 6

| | Src IP | | | | | Dst IP | | | | | Src Port | | | | | Dst Port | | | | | AS | | | | |
|---|---|---|---|---|---|---|---|---|---|---|---|---|---|---|---|---|---|---|---|---|---|---|---|---|---|
| q = | -2 | -½ | 0 | ½ | +2 | -2 | -½ | 0 | ½ | +2 | -2 | -½ | 0 | ½ | +2 | -2 | -½ | 0 | ½ | +2 | -2 | -½ | 0 | ½ | +2 |
| in | + | + | 0 | - | - | + | 0 | 0 | 0 | + | - | - | 0 | + | 0 | + | + | 0 | - | - | + | + | 0 | - | - |
| out | + | 0 | 0 | + | 0 | + | + | 0 | - | - | + | + | 0 | - | - | - | - | 0 | + | 0 | + | + | 0 | - | - |

$C_q$

## Fig. 7

| | | Src IP | | | | | Dst IP | | | | | Src Port | | | | | Dst Port | | | | | AS | | | | |
|---|---|---|---|---|---|---|---|---|---|---|---|---|---|---|---|---|---|---|---|---|---|---|---|---|---|---|
| | q = | -2 | -½ | 0 | ½ | +2 | -2 | -½ | 0 | ½ | +2 | -2 | -½ | 0 | ½ | +2 | -2 | -½ | 0 | ½ | +2 | -2 | -½ | 0 | ½ | +2 |
| Refl. DDoS | in | + | + | 0 | - | - | + | 0 | 0 | 0 | + | - | - | 0 | + | 0 | + | + | 0 | - | - | + | + | 0 | - | - |
| | out | + | 0 | 0 | + | 0 | + | + | 0 | - | - | + | + | 0 | - | - | - | - | 0 | + | 0 | + | + | 0 | - | - |
| DDoS 1 | in | + | + | + | + | 0 | + | + | 0 | - | - | + | + | 0 | - | - | 0 | 0 | 0 | - | - | + | + | + | + | 0 |
| | out | 0 | 0 | 0 | - | - | + | + | + | + | 0 | 0 | 0 | 0 | - | - | + | + | 0 | - | - | + | + | + | + | 0 |
| DDoS 2 | in | + | + | + | + | 0 | + | + | 0 | - | - | + | + | 0 | + | + | + | + | 0 | - | - | + | + | 0 | - | 0 |
| | out | 0 | 0 | 0 | + | 0 | 0 | 0 | 0 | 0 | 0 | 0 | + | 0 | 0 | 0 | 0 | 0 | 0 | - | - | 0 | 0 | - | - | - |
| Blaster W. | in | + | + | + | - | 0 | + | + | + | + | 0 | + | + | 0 | - | 0 | + | + | - | - | - | + | + | + | - | 0 |
| | out | + | + | 0 | 0 | 0 | + | + | + | + | 0 | + | + | 0 | - | 0 | + | + | 0 | - | - | + | + | + | - | - |
| Witty W. | in | 0 | 0 | 0 | - | - | + | + | + | + | 0 | + | + | 0 | - | - | + | + | + | + | 0 | 0 | 0 | 0 | + | + |
| | out | 0 | 0 | 0 | 0 | 0 | 0 | 0 | 0 | 0 | - | 0 | 0 | 0 | 0 | 0 | 0 | 0 | 0 | 0 | 0 | 0 | 0 | 0 | 0 | 0 |

$C_q'$

## Fig. 8

Europäisches
Patentamt

European
Patent Office

Office européen
des brevets

**EUROPEAN SEARCH REPORT**

Application Number

EP 09 00 4024

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | ARTUR ZIVIANI ET AL: "Network anomaly detection using nonextensive entropy" IEEE COMMUNICATIONS LETTERS, IEEE SERVICE CENTER, PISCATAWAY, NJ, US, vol. 11, no. 12, 1 December 2007 (2007-12-01), pages 1034-1036, XP011198706 ISSN: 1089-7798 * the whole document * | 1-17 | INV. H04L12/24 H04L12/26 H04L29/06 |
| A | WO 2008/051258 A2 (UNIV SOUTH CAROLINA [US]; JOHNSON JOSEPH E [US]) 2 May 2008 (2008-05-02) * abstract * * paragraphs [0006] - [0007] * * paragraphs [0013] - [0020] * * paragraph [0030] * | 1-17 | |
| A | NICHOLAS J A HARVEY ET AL: "Sketching and Streaming Entropy via Approximation Theory" FOUNDATIONS OF COMPUTER SCIENCE, 2008. FOCS '08. IEEE 49TH ANNUAL IEEE SYMPOSIUM ON, IEEE, PISCATAWAY, NJ, USA, 25 October 2008 (2008-10-25), pages 489-498, XP031366982 ISBN: 978-0-7695-3436-7 * the whole document * | 1-17 | |

-/--

TECHNICAL FIELDS
SEARCHED        (IPC)

H04L

The present search report has been drawn up for all claims

| Place of search | Date of completion of the search | Examiner |
|---|---|---|
| Munich | 16 July 2009 | Di Felice, M |

EPO FORM 1503 03.82 (P04C01)

Europäisches
Patentamt

European
Patent Office

Office européen
des brevets

## EUROPEAN SEARCH REPORT

Application Number

EP 09 00 4024

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| A,D | WAGNER A ET AL: "Entropy Based Worm and Anomaly Detection in Fast IP Networks" ENABLING TECHNOLOGIES: INFRASTRUCTURE FOR COLLABORATIVE ENTERPRISE, 14 TH IEEE INTERNATIONAL WORKSHOPS ON LINKOPING, SWEDEN 13-15 JUNE 2005, PISCATAWAY, NJ, USA,IEEE, 13 June 2005 (2005-06-13), pages 172-177, XP010870906 ISBN: 978-0-7695-2362-0 * the whole document * ----- | 1-17 | |
| A | DUFFIELD N ET AL: "ESTIMATING FLOW DISTRIBUTIONS FROM SAMPLED FLOW STATISTICS" COMPUTER COMMUNICATION REVIEW, ACM, NEW YORK, NY, US, vol. 33, no. 4, 1 October 2003 (2003-10-01), pages 325-336, XP001224091 ISSN: 0146-4833 * the whole document * ----- | 1-17 | TECHNICAL FIELDS SEARCHED (IPC) |

The present search report has been drawn up for all claims

| Place of search | Date of completion of the search | Examiner |
|---|---|---|
| Munich | 16 July 2009 | Di Felice, M |

EPO FORM 1503 03.82 (P04C01)

## ANNEX TO THE EUROPEAN SEARCH REPORT
## ON EUROPEAN PATENT APPLICATION NO.

EP 09 00 4024

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2009

| Patent document cited in search report | Publication date | Patent family member(s) | Publication date |
|---|---|---|---|
| WO 2008051258 A2 | 02-05-2008 | US 2009024549 A1 | 22-01-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Barford, P. ; Kline, J. ; Plonka, D. ; Ron, A.** A signal analysis of network traffic anomalies. *IMW '02: Proceedings of the 2nd ACM SIGCOMM Workshop on Internet measurement,* 2002, 71-82
- **Scherrer, A. ; Larrieu, N. ; Owezarski, P. ; Borgnat, P. ; Abry, P.** Non-Gaussian and long memory statistical characterizations for internet traffic with anomalies. *IEEE Transactions on Dependable and Secure Computing,* 2007, vol. 4 (1), 56-70
- **Dubendorfer, T. ; Plattner, B.** Host behavior based early detection of worm outbreaks in internet backbones. *14th IEEE WET ICE,* 2005, 166-171
- **Quittek, J. ; Zseby, T. ; Claise, B. ; Zander, S.** *Rfc 3917: ''Requirements for IP flow information export (ipfix)'',* October 2004

- **Shannon, C.** Prediction and entropy of printed english. *Bell System Technical Journal,* January 1951
- **Wagner, A. ; Plattner, B.** Entropy based worm and anomaly detection in fast IP networks. *14th IEEE WET ICE,* June 2005
- **Lakhina, A. ; Crovella, M. ; Diot, C.** Diagnosing network-wide traffic anomalies. *ACM SIGCOMM,* August 2004
- **Li, X. ; Bian, F. ; Crovella, M. ; Diot, C. ; Govindan, R. ; Iannaccone, G. ; Lakhina, A.** *Detection and Identification of Network Anomalies Using Sketch Subspaces*
- **Ziviani, A. ; Monsores, M.L. ; Rodrigues, P.S.S. ; Gomes, A.T.A.** Network anomaly detection using non-extensive entropy. *IEEE Communications Letters,* 2007, vol. 11 (12